(19) Europäisches Patentamt
European Patent Office
Office européen des brevets

(11) **EP 1 958 154 B1**

(12) **EUROPÄISCHE PATENTSCHRIFT**

(45) Veröffentlichungstag und Bekanntmachung des Hinweises auf die Patenterteilung:
**16.05.2012  Patentblatt 2012/20**

(21) Anmeldenummer: **06829185.5**

(22) Anmeldetag: **29.11.2006**

(51) Int Cl.:
*G06T 3/00* (2006.01)     *G06T 7/00* (2006.01)

(86) Internationale Anmeldenummer:
**PCT/EP2006/011463**

(87) Internationale Veröffentlichungsnummer:
**WO 2007/065589 (14.06.2007 Gazette 2007/24)**

(54) **VERFAHREN ZUR TOPOGRAPHISCHEN DARSTELLUNG VON VERÄNDERUNGEN IN EINEM UNTERSUCHTEN GEHIRN**

METHOD FOR TOPOGRAPHICAL PRESENTATION OF ALTERATIONS IN AN EXAMINED BRAIN

PROCEDE POUR LA REPRESENTATION TOPOGRAPHIQUE DE MODIFICATIONS DANS UN CERVEAU EXAMINE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **05.12.2005  DE 102005058095**

(43) Veröffentlichungstag der Anmeldung:
**20.08.2008  Patentblatt 2008/34**

(73) Patentinhaber: **Forschungszentrum Jülich GmbH 52425 Jülich (DE)**

(72) Erfinder:
• **AMUNTS, Katrin**
  **52447 Welz (DE)**
• **ZILLES, Karl**
  **50859 Köln (DE)**
• **MOHLBERG, Hartmut**
  **40627 Düsseldorf (DE)**
• **SCHLEICHER, Axel**
  **50374 Erftstadt (DE)**
• **HÖMKE, Lars**
  **67354 Römerberg (DE)**

(74) Vertreter: **Jostarndt, Hans-Dieter Jostarndt Patentanwalts-AG Brüsseler Ring 51 52074 Aachen (DE)**

(56) Entgegenhaltungen:
• AMUNTS K; WEISS P H; MOHLBERG H; PIEPERHOFF P; EICKHOFF S; GURD J M; MARSHALL J C; SHAH N J; FINK G R; ZILLES K: "Analysis of neural mechanisms underlying verbal fluency in cytoarchitectonically defined stereotaxic space - The roles of Brodmann areas 44 and 45" NEUROIMAGE, Bd. 22, Nr. 1, 2004, Seiten 42-56, XP002424664
• A. SCHLEICHER, K. AMUNTS, S. GEYER, P. MOROSAN, K. ZILLES: "Observer-Independent Method for Microstructural Parcellation of Cerebral Cortex: A Quantitative Approach to Cytoarchitectonics" NEUROIMAGE, Bd. 9, Nr. 1, 1999, Seiten 165-177, XP002424665
• EICKHOFF S B ET AL: "A new SPM toolbox for combining probabilistic cytoarchitectonic maps and functional imaging data" NEUROIMAGE, ACADEMIC PRESS, ORLANDO, FL, US, Bd. 25, Nr. 4, 1. Mai 2005 (2005-05-01), Seiten 1325-1335, XP004870116 ISSN: 1053-8119
• S. HENN, T. SCHORMANN, K. ENGLER, K. ZILLES, K. WITSCH: "Elastische Anpassung in der digitalen Bildverarbeitung auf mehreren Auflösungsstufen mit Hilfe von Mehrgitterverfahren" MUSTERERKENNUNG 1997 (19. DAGM SYMPOSIUM), 1997, XP009080525
• S. HENN, K. WITSCH: "A Multigrid Approach for Minimizing a Nonlinear Functional for Digital Image Matching" COMPUTING, Bd. 64, 2000, Seite 348, XP002424666

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- S. HENN, K. WITSCH: "Multimodal image registration using a variational approach" SIAM JOURNAL ON SCIENTIFIC COMPUTING, Bd. 25, Nr. 4, 2003, Seiten 1429-1447, XP009080509
- S. HENN ET AL: "LESION PRESERVING IMAGE REGISTRATION WITH APPLICATIONS TO HUMAN BRAINS" PROCEEDINGS ANNUAL CONFERENCE OF THE GERMAN SOCIETY FOR PATTERN RECOGNITION DAGM, XX, XX, Bd. 3175, 30. August 2004 (2004-08-30), Seiten 496-503, XP009080529
- L. HÖMKE, B. WEDER, F. BINKOFSKI, K. AMUNTS: "Lesion mapping in MRI data - an application of cytoarchitectonic probabilistic maps" SECOND VOGT-BRODMANN SYMPOSIUM, [Online] 2004, XP002424667 Jülich Gefunden im Internet: URL:http://www.am.uni-duesseldorf.de/~hoem ke/posters/ lesionmapping.pdf> [gefunden am 2007-03-13]

EP 1 958 154 B1

**Beschreibung**

Die Erfindung betrifft ein Verfahren zur topographischen Darstellung von insbesondere strukturellen Veränderungen in Gehirnen unter Einsatz von Volumendatensätzen.

Aus dem Artikel G. E. CHRISTENSEN, et al. "Volumetric Transformation of Brain Anatomy", IEEE Trans. on Medical Imaging, Vol. 16, No. 6, Dec. 1997, S. 864-877 ist ein Verfahren bekannt, bei dem funktionale Bereiche des Körpers bildmäßig erfasst und analysiert werden. Bei diesem Verfahren werden relative Positionen von Volumenelementen eines untersuchten Objektes mit entsprechenden Volumenelementen eines Referenzobjektes verglichen.

Der Artikel A. Schleicher et al. "Observer-Independent Method for Microstructural Parcellation of Cerebral Cortex: A Quantitative Approach to Cytoarchitectonics", Neurolmage 9, 165 - 177 (1999), beschreibt eine betrachterunabhängige Methode, Grenzen zwischen kortikalen Gebieten zu identifizieren.

Der Artikel S.B. Eickhoff et al. "A new SPM toolbox for combining probabilistic cytoarchitectonic maps and functional imaging data", Neurolmage 25, 1325 - 1335 (2005) beschreibt die Verwendung von dreidimensionalen probabilistischen zytoarchitektonischen Karten, die aus Untersuchungen an post-mortalen Gehirnen gewonnen wurden.

Der Artikel S. Henn et al. "Elastische Anpassung in der digitalen Bildverarbeitung auf mehreren Auflösungsstufen mit Hilfe von Mehrgitterverfahren", 19.DAGM-Symposium Braunschweig, 15,-17.September 1997, Seiten 392 - 399, beschreibt ein Verfahren zur elastischen Anpassung eines Ausgangsvolumens an ein Referenzvolumen. Hierbei erfolgt die Berechnung der Verschiebungsvektoren auf jeder Auflösungsstufe durch ein Mehrgitterverfahren proportional zur Anzahl der Bildpunkte.

Der Artikel S. Henn et al. "Lesion Preserving Image Registration with Applications to Human Brains", DAGM 2004, 496 - 503 (2004), Springer-Verlag Berlin Heidelberg 2004, beschreibt ein automatisches Bildregistrierungsverfahren für Bilder mit strukturellen Verformungen, beispielsweise bei Verletzungen des menschlichen Gehirns.

Der Artikel L. Hömke et al. "Lesion mapping in MRI data: an application of cytoarchitectonic probabilistic maps", 2.Vogt-Brodmann Symposium, Jülich, Germany 2004, beschreibt ein Verfahren zur Transformation von Bilddaten bei Gehirnen mit Verletzungen.

Aus dem Artikel K. Amunts et al. "Analysis of neural mechanisms underlying verbal fluency in cytoarchitectonically defined stereotaxic space - The roles of Brodmann areas 44 and 45", Neurolmage 22, 42 - 56 (2004), ist ein Verfahren zur topographischen Darstellung von Veränderungen in einem untersuchten Gehirn unter Einsatz von Volumendaten bekannt, dass keine Unterscheidung bei den Transformationsklassen zugrunde legt.

Die Artikel S. Henn "A Multigrid Approach for Minimizing a Nonlinear Functional for Digital Image Matching", Computing 64, 339 - 348 (2000). Springer Verlag 2000, und S. Henn et al. "Multimodal image registration using a variational approach", SIAM J.Sci.Comput, 1429 - 1447 (2003), beschreiben klassische Multigrid-Methoden mit punktweiser Relaxation.

Es ist Aufgabe der Erfindung, ein gattungsgemäßes Verfahren bereitzustellen, das eine schnelle zuverlässige Ermittlung von Bereichen des untersuchten Gehirns ermöglicht.

Erfindungsgemäß wird diese Aufgabe gelöst wie in Anspruch 1 definiert.

Zur Erhöhung der Vergleichbarkeit verschiedener Areale verschiedener Gehirne unter Berücksichtigung der interindividuellen Variabilität ist es zweckmäßig, dass die Volumendatensätze mit einem elastischen Registrierungsverfahren auf einen Zielvolumendatensatz transformiert werden.

Die nachfolgend dargestellte Bildregistrierung beinhaltet eine Deformation eines Bildes (Template), so dass dieses Bild ähnlich oder identisch einem anderen (Referenz) wird. In der Literatur, gerade in der medizinischen, finden sich dafür viele verschiedene Begriffe: matching, registration, morphing, warping, normalization, etc.

Insbesondere ist es vorteilhaft, dass mit Hilfe eines Mehrgitterverfahrens ein grauwertbasiertes Energiefunktional ermittelt wird.

Zweckmäßigerweise besteht das Energiefunktional aus einem elastischen Anteil und einer Grauwertdistanz der Volumendatensätze.

Das verfahren eignet sich sowohl für Anwendungsfälle, bei denen Gebiete ohne Einsatz eines Grenzfindungsschrittes untersucht werden, als auch für eine Untersuchung einer Grenze zwischen zwei Arealen.

Beispiele für einen Einsatz ohne einen Grenzfindungsschritt sind die Kartierung von subkortikalen Kerngebieten und von Faserbahnen.

Eine Untersuchung von Grenzbereichen zwischen Arealen ist jedoch besonders vorteilhaft, weil sich an diesen Grenzbereichen funktionelle und/oder strukturelle Eigenschaften des Gehirns ändern.

Dementsprechend sind die in dieser Anmeldung dargestellten Grenzfindungsschritte besonders vorteilhaft.

Beispiele für die Anwendung erfindungsgemäßer Grenzfindungsschritte betreffen z.B. Grenzen zwischen zytoarchitektonischen Arealen, wie die Grenze zwischen dem striären und dem extrastriären Kortex.

Eine besonders bevorzugte Ausführungsform der Erfindung zeichnet sich dadurch aus, dass die Grenze zwischen den Arealen durch eine Änderung wenigstens eines funktionalen Parameters ermittelt wird und dass resultierende Volumenelemente der Areale erfasst und so transformiert werden, dass die transformierten Volumenelemente des

3

Ausgangsdatensatzes wenigstens einzelnen Volumenelementen eines Referenzgehirns entsprechen.

Eine besonders bevorzugte Ausführungsform der Erfindung zeichnet sich dadurch aus, dass für Volumenelemente des Referenzgehirns jeweils ein Vektor ermittelt wird, der eine Transformation in die jeweils entsprechende räumliche Koordinate des untersuchten Gehirns ermöglicht, wobei mehrere Vektoren abgespeichert werden und für weitere Untersuchungen beliebig oft zur Verfügung stehen.

Ferner ist es zweckmäßig, dass die Daten des untersuchten Gehirns und des Referenzgehirns in einem Zieldatensatz zu einer Überlagerung gebracht werden, wobei Wahrscheinlichkeitskarten berechnet werden, die für mehrere Volumenelemente des untersuchten Gehirns eine relative Häufigkeit angeben, mit der das ermittelte funktionale Areal in einer entsprechenden Region dieses Referenzgehirns vorhanden ist.

Die Wahrscheinlichkeitskarten werden auch als probabilistische Karten, probability maps oder population maps bezeichnet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:

Fig. 1 einen zellkörpergefärbten histologischen Schnitt durch ein post mortem Gehirn;

Fig. 2 den in Fig. 1 dargestellten Schnitt nach Durchführung eines erfindungsgemäßen Registrierungsverfahrens und

Fig. 3 ein erfindungsgemäß berechnetes Transformationsfeld.

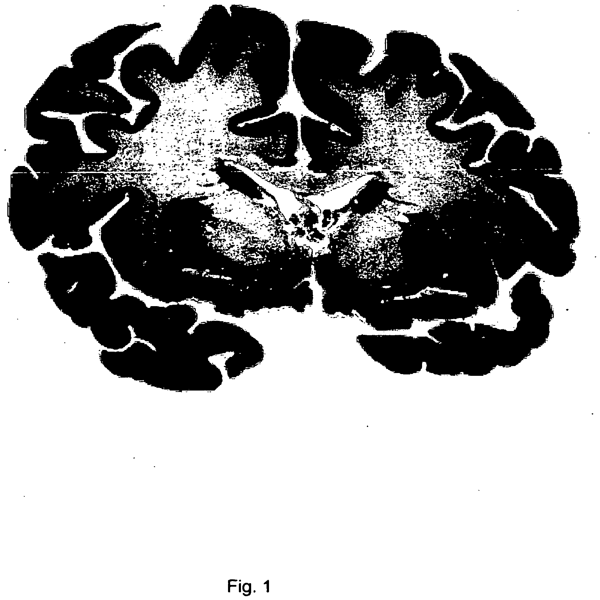

Der in Fig. 1 dargestellte histologische Schnitt durch ein post mortem Gehirn ist nach Einbettung in Paraffin, Schneiden mit einem Mikrotom in 5 $\mu$m bis 200 $\mu$m, vorzugsweise etwa 20 $\mu$m dicke Schnitte und anschließender Zellkörperfärbung entstanden.

Durch diese histologischen Verarbeitungsschritte entstehen erhebliche Deformationen. Diese Deformationen sind nicht linearer Art und nicht vorbestimmbar, da sie von Einzelheiten des Verarbeitungsvorgangs abhängig und somit lokal unterschiedlich sind.

Beispiele für erhebliche Deformationen sind Risse, Stauchungen, Streckungen und Überlappungen einzelner Gewebeteile.

Vor der Einbettung in Paraffin wurden von dem Gehirn mittels eines geeigneten Bildgebungsverfahrens, vorzugsweise eines MR-Verfahrens, drei-dimensionale Bilddatensätze erzeugt.

Die mit Hilfe des Bildgebungsverfahrens ermittelten Datensätze des Gehirns werden im Folgenden als nicht deformierte Referenzstruktur für den entsprechenden Datensatz der zwei-dimensionalen histologischen Schnittserie verwendet.

Dazu ist es vorteilhaft, die ermittelten Datensätze des Gehirns mittels einer geeigneten Transformation entsprechend den histologischen Schnitten auszurichten.

Dies bedeutet beispielhaft, dass die ermittelten Datensätze normiert und korrigiert werden, so dass sie mit entsprechenden Bildelementen des histologischen Schnittes korrespondieren.

Hierbei ist es besonders vorteilhaft, dass der ermittelte Datensatz exakt so ausgerichtet wird, dass eine Bildebene mit der Ebene des histologischen Schnitts übereinstimmt.

Insbesondere sollten hierbei allen histologischen Schnitten entsprechende Bildebenen des Datensatzes zugeordnet werden.

Durch die Anwendung von linearer affiner Transformation (Translation, Rotation, Scherung und/oder Skalierung), Grauwertnormierung und nichtlinearer elastischer Registrierung wird eine Transformation des histologischen Schnittes auf den korrespondierenden Schnitt des ermittelten Datensatzes erreicht.

Insbesondere ist es vorteilhaft, die verschiedenen Transformationen zu kombinieren, um eine sequentielle Bearbeitung in einem Verfahrensschritt zu ermöglichen und so die einzelnen Transformationen zusammenzufassen. Hierdurch wird insbesondere die Anzahl der Interpolationen reduziert.

Die digitalisierten histologischen Schnitte können insbesondere dazu verwendet werden, um funktionale Areale oder andere Strukturen zu markieren, drei-dimensional zu registrieren und in ein gemeinsames Referenzsystem zu überführen.

Zu dieser Überführung können sämtliche der dargestellten Transformationsverfahren eingesetzt werden.

Insbesondere ermöglicht die Markierung in den digitalisierten histologischen Schnitten eine nicht interaktive Übertragung der entsprechend dem Verfahren bestimmte Grenzen funktionaler Areale und anschließend eine drei-dimensionale Rekonstruktion der post mortem Gehirne.

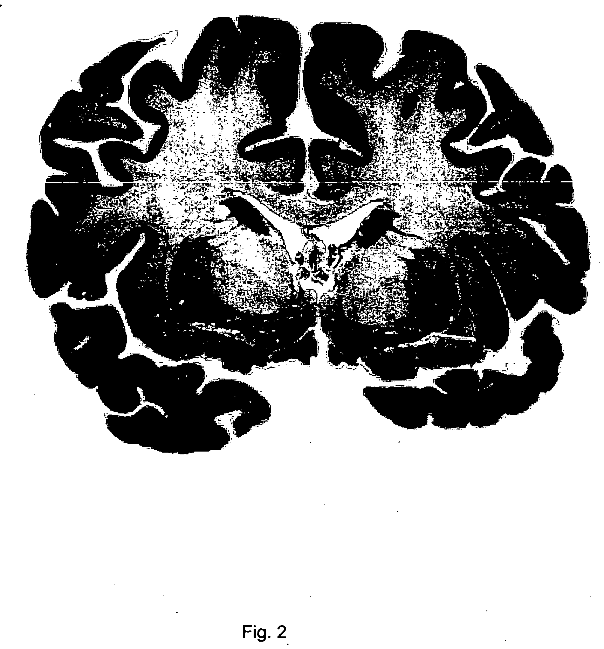

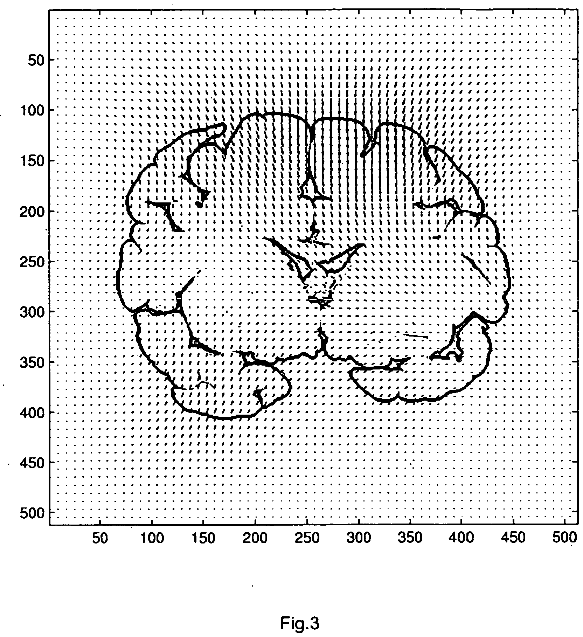

Ein beispielhaftes Transformationsfeld des in Fig. 1 dargestellten histologischen Schnittes auf den in Fig. 2 dargestellten korrigierten Schnitt ist in Fig. 3 dargestellt.

Erfindungsgemäß werden funktionale und/oder strukturelle Eigenschaften in Raumbereichen der Gehirne ermittelt. Die Ermittlung dieser Eigenschaften kann in zwei- oder dreidimensionalen Bildern auf verschiedene Weise erfolgen.

Besonders vorteilhaft ist die Untersuchung histologischer Schnitte von post mortem Gehirnen, da diese Schnitte eine besonders hohe Auflösung haben.

Bei einer Untersuchung an Gehirnen lebender Probanden eignen sich in der Medizintechnik eingesetzte bildgebende Verfahren wie die Positronen-Emissions-Tomographie (PET) und die Magnet-Resonanz-Tomographie (MRT). Insbesondere ist es zweckmäßig, die Areale mittels funktioneller Magnet-Resonanz-Tomographie (fMRT) oder hochaufgelöster struktureller MR zu ermitteln.

Der Begriff "Areale" bezeichnet sämtliche Gebiete, die sich bezüglich wenigstens eines strukturellen Parameters oder eines strukturinduzierten funktionalen Parameters von anderen Gebieten unterscheiden.

Besonders bevorzugte Ausführungsbeispiele der Areale sind kortikale, zytoarchitektonische, rezeptorarchitektonische und myeloarchitektonische Areale und andere Areale, die sich hinsichtlich des laminären Musters unterscheiden, wie sie z.B. in histologischen Schnitten oder in strukturellen MR Datensätzen erfasst werden können. Diese laminären Muster werden als "architektonische" Eigenschaften des Kortex bezeichnet.

Die Bestimmung kortikaler Grenzen wird mit Hilfe eines Algorithmus-basierten Verfahrens objektiviert, das auf der Erfassung laminärer Veränderungen morphometrischer und/oder stereologischer Parameter des Kortex, z. B. des Grey Level Index (Schleicher und Zilles, 1990: A quantitative approach to cytoarchitectonics: analysis of structural inhomogeneities in nervous tissue using an image analyser. J.Microsc. 157:367-381) und der optischen Dichte beruht, der multimodalen Auswertung von diesen laminären Veränderungen quantifizierenden Profilen über Merkmalsextraktion und Distanzberechnung, z. B. durch den Mahalanobis-Abstand, und der statistischen Überprüfung der Signifikanz der Distanzmaße (z. B. Hotelling $T^2$-Test).

Der Hotelling $T^2$-Test ist ein multivariates Verfahren zum Nachweis eines statistisch signifikanten Unterschieds zwischen zwei Gruppen von Objekten, hier von zwei Gruppen von Merkmalsvektoren (Bortz 1999). Jede Gruppe beschreibt die Form des laminären Musters in einem definierten Kortexabschnitt. Der Test berechnet den Mahalanobisabstand zwischen zwei Gruppen und prüft die Signifikanz durch Vergleich des Abstands mit einem aus den Daten berechneten Schwellwert.

Andere Möglichkeiten zur statistischen Überprüfung der Signifikanz der Distanzmaße sind aus Bortz J. (1999) Statistik für Sozialwissenschaftler. Springer, Berlin, bekannt.

Alternativen zur Überprüfung der Distanzmaße sind die einfaktorielle, multivariate Varianzanalyse und geeignete Permutationstests. Der Vorteil des Hotelling $T^2$-Test ist die Berücksichtigung der Korrelationen zwischen den Merkmalen und die dadurch erhöhte Sensitivität des Tests bei der Grenzenfindung. Permutationstests sind ebenfalls implementiert, sind jedoch sehr rechenaufwendig und im Ergebnis mit dem Hotelling $T^2$-Test vergleichbar.

$$D^2 = d' \times C^{-1} \times d$$

Dabei ist $D^2$ der Mahalanobisabstand, wobei d der mittlere Differenzvektor der Merkmalsvektoren, d' der transponierte mittlere Differenzvektor und $C^{-1}$ die Inverse der gepoolten Varianz-Kovariansmatrix (Mahalanobis 1949) ist. Mahalanobis, P.C., Majumda, D.N., Rao, C.R. (1949). Anthropometric survey of the united provinces. A statistical study. Sankhya 9, 89-324

Nicht-laminär aufgebaute Strukturen, z. B. subkortikale Kerngebiete, können ebenfalls als "Areale" aufgrund ihrer architektonischen Eigenschaften definiert werden.

Die in zwei-dimensionalen histologischen Schnitten oder zwei-dimensionalen MR-Datensätzen definierten Grenzen werden im entsprechenden Bild des histologischen Schnitts oder MR Datensatzes markiert, wie dieser dreidimensional rekonstruiert und im Kontext der kompletten Himschnittserie an einen Zielvolumendatensatz eines beliebigen anderen menschlichen Gehirns mit Hilfe eines mehrstufigen Registrierungsverfahrens angepasst, das mit einer nichtlinearen elastischen Registrierung abschließt. Dabei werden mit Hilfe eines Multigrid-Ansatzes und/oder Multiskalen-Ansatzes Transformationsfelder berechnet, die für jedes Element des Zieldatensatzes einen Vektor angeben, der die Transformation des Zielsatzes auf den Ausgangsdatensatz beschreibt.

Die aus verschiedenen post mortem oder in vivo Gehirnen gewonnenen Datensätze architektonisch definierter Areale werden in diesem Zieldatensatz zur Überlagerung gebracht, wobei probabilistische Karten berechnet werden, die für jedes Voxel des Referenzraumes eine relative Häufigkeit angeben, mit der die Region in der untersuchten Stichprobe von post mortem Gehirnen präsent war, wobei diese Karten farbkodiert werden.

Die probabilistischen Karten und der Volumendatensatz eines Patienten- oder Probandengehirns (z. B. MRT, CT) werden in denselben Raum transformiert und dort zur Überlagerung gebracht. Dies kann entweder der Raum des Volumendatensatzes des Patienten- oder Probandengehirns oder der der probabilistischen Karten sein.

Um eine eindeutige Registrierung miteinander korrespondierender Strukturen in Patientengehirnen, z. B. mit Hirnläsion (insbesondere Tumor, nach Infarkt) mit probabilistischen Karten im Referenzgehirn zu erreichen, wird das Energiefunktional an der Stelle der strukturellen Veränderungen so modifiziert, dass nur der elastische Anteil und nicht die Grauwertdistanz im Energiefunktional berücksichtigt wird.

Die Transformation wird nachfolgend in allgemeiner Form anhand eines Template-Bildes und eines Referenzbildes erläutert. Das Template-Bild ist insbesondere das Ausgangsbild. Das Referenzbild ist beispielsweise ein Bild oder Bildelement eines Referenzgehirns oder eines auf andere Weise und/oder zu einem anderen Zeitpunkt als das Template-Bild ermittelten Datensatzes des Ausgangsbildes.

Gegeben seien zwei Bilder, $T$ (Template) und $R$ (Referenz), die durch Funktionen auf einem Gebiet $\Omega \subset \mathbf{R}^n$ gegeben sind. Es wird angenommen, dass $T$ durch eine

Transformation $\Phi^{-1}$ aus $R$ hervorgegangen ist. Gesucht ist nun die Transformation $\Phi(u)(x) : x \mapsto x - u(x)$. Die Funktion $\Phi$ stellt eine Relation zwischen Punkten der Referenz mit Punkten des Templates her.

Der Unterschied zwischen den beiden Bildern kann durch ein geeignetes Abstandsmaß $D$ [$T,R,u,\Omega$] charakterisiert werden. Um $\Phi$ zu berechnen, wird ein $u$, das $D$ minimiert, gesucht. Dieses Problem ist im Allgemeinen schlecht gestellt. Mindestens eine der folgenden Bedingungen ist verletzt:

- es existiert eine Lösung,
- die Lösung ist eindeutig,
- die Lösung ist stetig in den Daten.

Die dritte Bedingung impliziert, dass kleine Änderungen in den Daten nur zu kleinen Änderungen in der Lösung führen dürfen. Dies kann auch als Forderung nach Robustheit gegenüber Rauschen verstanden werden.

Um die Regularität der Lösung u zu gewährleisten, wird zusätzlich zu $D$ ein Regularisierungsterm $R$ [$\alpha,u,\Omega$] betrachtet, der bestimmte Klassen von Transformationen bevorzugt - für diese Transformationen klein bleibt - und alle anderen Transformationen bestraft - für diese Transformationen groß wird. Der Parameter $\alpha$ ist ein Skalar, der die Größe von $R$ skaliert und somit dessen Einfluss steuert.

Unterschiedliche Registrierungsverfahren unterscheiden sich oft in der Wahl des Distanzmaßes $D$ und des Regularisierungsterms $R$. Sind die Grauwerte von $T$ und $R$ vergleichbar, so bietet sich der quadrierte Grauwertabstand (SSD: sum of squared differences)

$$D[T,R,u,\Omega] = \tfrac{1}{2}\int_\Omega \big(T(x-u(x))-R(x)\big)^2 dx = \tfrac{1}{2}\int_\Omega d(u(x))^2 dx = \tfrac{1}{2}\big\|d(u)\big\|_2^2$$

als Distanzmaß an. Stammen die Bilder aus verschiedenen bildgebenden Verfahren (multimodal), ist dies oft nicht der Fall, z. B. bei MR und CT. Eventuell werden auch verschiedene Dinge dargestellt, z. B. bei MR und PET. Dann sind geeignete Abstandsmaße zu definieren. In manchen Fällen lassen sich durch geeignete Grauwerttransformationen die Grauwertverteilungen von Bildern aus verschiedenen Modalitäten aneinander anpassen, z.B. bei MR und Histologie. In diesen Fällen kann weiterhin das oben beschriebene Maß verwendet werden. Im multimodalen Fall werden oft statistische Maße wie Mutual Information (MI) verwendet, die die Verteilungen der Grauwerte in Beziehung setzen.

Als Regularisierungsterm wird hier das elastische Potential der Verschiebung $u$ gewählt. Dies führt auf die Bilinearform

$$I[u,v] = \int_\Omega \left( \lambda \mathrm{div}(u)\mathrm{div}(v) + 2\mu \sum_{i,j}^{n} \varepsilon_{i,j}(u)\varepsilon_{i,j}(v) \right) dx$$

wobei

$$\varepsilon_{i,j} := \frac{1}{2}\left( \frac{\partial u_i}{\partial x_j} + \frac{\partial u_j}{\partial x_i} \right).$$

Um die Minimierung des nicht-linearen Funktionales zu ermöglichen, wird **D** unter Verwendung der Taylor Entwicklung linearisiert und mit **R** regularisiert. Dies führt entweder auf ein regularisiertes Gradientenabstiegsverfahren oder ein regularisiertes Newton-artiges Verfahren. Das bevorzugte Verfahren ist das Newton-artige Verfahren. Mit Hilfe der Variationsrechnung werden die Euler-Lagrange Gleichungen, deren Lösung eine notwendige Bedingung für ein Minimum darstellt, berechnet. Die Gleichungen für das regularisierte Gradientenabstiegsverfahren lauten

$$\alpha L u(x) \quad = \quad \nabla T(x - u(x))\big(T(x - u(x)) - R(x)\big) \quad \text{für } x \in \Omega$$

$$u(x) \quad = \quad 0 \qquad\qquad\qquad \text{für } x \in \partial\Omega$$

Im Folgenden wird dies auch als Randwertproblem 1 bezeichnet.

Für das regularisierte Newton-artige Verfahren erhält man

$$\big(J_d^t J_d + \alpha L\big)u(x) \quad = \quad \nabla T(x - u(x))\big(T(x - u(x)) - R(x)\big) \quad \text{für } x \in \Omega$$

$$u(x) \quad = \quad 0 \qquad\qquad\qquad \text{für } x \in \partial\Omega$$

Im Folgenden wird dies auch als Randwertproblem 2 bezeichnet. Der elliptische Differentialoperator $L$ ist der Navier-Lamé Operator

$$Lu = -\mu u - (\mu + \lambda)\nabla(\nabla u)\,,$$

mit den Lamé-Konstanten $\mu, \lambda$, die die elastischen Eigenschaften beschreiben. Der Term $J_d^t J_d$ ist der lineare Anteil der Hessematrix aus der Linearisierung von **D**, *wobei* $J_d = (\partial T_u/\partial x_1, ..., \partial T_u/\partial x_m)$.

Beide Verfahren definieren eine Iteration

$$u^{k+1} = u^k + v\,,$$

wobei $v$ der Lösung des Randwertproblems entspricht.

Im Falle des Gradientenabstiegsverfahrens entspricht $v$ einer Abstiegsrichtung. Das wesentliche Problem besteht in der Wahl einer geeigneten Schrittweite. Hierzu wird die Lösung auf eine Einheitslänge normiert $\hat{v} := v/\|v\|_\infty$ und ein Parameter $T^*$ bestimmt, so dass gilt

$$\tau^* = \arg\min_{\tau \in [0, v_{\max}]} \boldsymbol{D}(u^k + \tau v)\tau\,.$$

Dieses Vorgehen wird auch als Liniensuche bezeichnet, da entlang einer Linie der Abstiegsrichtung die Schrittlänge gesucht wird, die den Abstand minimiert. Die maximale zulässige Schrittweite wird dabei von $v_{\max}$ bestimmt. Die Wahl von $\alpha$ ist hier nicht entscheidend, sie beeinflusst lediglich $\|v\|_\infty$, da $\alpha$ linear in die Gleichung eingeht. Der Parameter wird also durch die Wahl von $v_{\max}$ implizit bestimmt. Dies impliziert auch, dass kleine Schrittweiten einer starken Regularisierung entsprechen. Im Fall von Randwertproblem 2 spielt die Wahl von $\alpha$ eine wichtige Rolle, da es a priori gewählt werden muss. Der Parameter wird über eine Trustregion-Strategie gesteuert. Die Linearisierung von **D** ist nur in einer Umgebung gültig, deren Größe von dem Fehler der Linearisierung abhängt. Eine entsprechende Wahl von $\alpha$ garantiert, dass die berechnete Lösung in einem bestimmten Radius bezüglich der durch $L$ induzierten Norm liegt. Ein

großes $\alpha$ resultiert in einem kleinen Trustregion-Radius, ein kleines $\alpha$ in einem großen Trustregion-Radius. Um den Parameter zu steuern, wird das Verhältnis zwischen der tatsächlichen Reduktion und der durch das lineare Modell vorhergesagten Reduktion bestimmt. Dies führt auf die Armijo-Goldstein Regel

$$\rho_k = \frac{D(u^k) - D(u^k + v)}{\langle \nabla T_u (T_u - R), v \rangle} \ .$$

Der Parameter $\alpha$ und die nächste Iterierte $u^{k+1}$ werden folgendermaßen bestimmt:

$$(\alpha_{k+1}, u^{k+1}) = \begin{cases} \left(\frac{1}{2}\alpha_k, u^{k+1}\right) & \text{für } \rho_k > \rho_+ \\ \left(2\alpha_k, u^k\right) & \text{für } \rho_k < \rho_- \\ \left(\alpha_k, u^{k+1}\right) & \text{sonst} \end{cases} \ .$$

Ist $\rho_k$ kleiner als ein gewählter Wert $\rho_-$ so wird die neue Lösung verworfen und der Trustregion-Radius verkleinert. Ist er größer als ein gewählter Wert $\rho_+$, so wird die neue Lösung akzeptiert und der Trustregion-Radius vergrößert. In allen anderen Fällen wird die Lösung akzeptiert und der Trustregion-Radius beibehalten. Bevorzugte Werte sind $\rho_- = 0.1$ und $\rho_+ = 0.5$.

Die Verfahren im Vergleich

Die Gradientenabstiegsverfahren sind global konvergente Verfahren. Sie konvergieren im Allgemeinen nur sehr langsam, d.h. eine große Anzahl von Iterationen ist nötig, da die Linearisierung oft nur in kleinen Regionen einen kleinen Fehler hat. Daran ändert auch die Liniensuche nichts, da man den Parameter $v_{max}$ nur in Regionen, in denen das lineare Modell das nichtlineare Funktional gut approximiert, groß wählen kann und die Überprüfung großer Intervalle sehr aufwendig ist. Falls $v_{max} = 2$ also eine Verschiebung von maximal zwei Pixeln gewählt wird, ist dies als ein Parameter anzusehen, der ein guter Kompromiss ist.

Bei den Newton-artigen Verfahren handelt es sich um lokal konvergente Verfahren, d.h. in der Nähe der Lösung konvergieren sie sehr schnell. Bei weiter Entfernung von der Lösung muss die Newtonrichtung nicht unbedingt eine Abstiegsrichtung sein, wenn z.B. die Hessematrix nicht positiv definiert ist. Diese Problematik wird durch die Trustregion-Strategie behoben.

Für $\alpha \to \infty$ verhält sich das Verfahren im Wesentlichen wie ein Gradientenabstiegsverfahren. In Fällen, wo die Hessematrix schlecht konditioniert ist, wird der Parameter $\alpha$ groß gewählt. Dies ist gleichbedeutend mit einer starken Regularisierung des Problems und daher ist die Newtonrichtung auch eine Abstiegsrichtung. Kommt man in den Bereich der Lösung, so wird $\alpha$ immer kleiner werden und das Verfahren verhält sich mehr wie ein Newton-Verfahren, d.h. es ergibt sich eine schnelle lokale Konvergenz.

Anstatt der Trustregion-Strategie könnte hier auch wieder ein klassischer Linesearch verwendet werden. Dann ist $\alpha$ aber fest und wir erhalten nicht die gerade beschriebenen Eigenschaften. Außerdem verschärft dies wieder die Problematik einer geeigneten Wahl des Parameters $\alpha$. Bei der Trustregion-Strategie kann $\alpha$ am Anfang konservativ (groß) gewählt werden und der Algorithmus passt $\alpha$ im Laufe der Iteration an. Ein statisches $\alpha$ ist hingegen immer ein Kompromiss zwischen Stabilität und Konvergenzverhalten.

Die Gleichungen werden über dem Gebiet $\Omega$ diskretisiert. Dies führt auf ein System partieller Differentialgleichungen, dessen Lösung die Verschiebung u in jedem diskreten Gitterpunkt ist. Die Gleichungen werden mit Mehrgitterverfahren gelöst.

Mehrgitterlöser für innere Iteration

Mehrgitterverfahren sind effiziente iterative Gleichungssystemlöser, die approximative Lösungen mit beliebiger Genauigkeit in asymptotisch linearer Zeit berechnen können (U. Trottenberg, C.W. Oosterlee and A. Schüller (2001) : Multigrid, Academic Press). Mehrgitterverfahren setzen sich aus mehreren Komponenten zusammen. Im Wesentlichen sind dies Relaxation, Restriktion, Interpolation, Grobgitterkorrekturschema. Die Wahl der Komponenten hängt von der zugrunde liegenden Gleichung ab.

Für das regularisierte Abstiegsverfahren, das heißt im Fall von Randwertproblem 1, kann ein Standardmehrgitterverfahren verwendet werden. Diese weisen vorzugsweise folgende Komponenten auf:

- Prolongation (Interpolation) mit linearer Interpolation
- Restriktion mit fullweighting

- Grobgitterkorrektur mit Correction Scheme (CS) im Falle linearer Gleichungen
- Punktweise Gauss-Seidel Verfahren als Glätter.

Als weitere Parameter sind anzusehen: die Anzahl der Glättungsschritte, die Art des Mehrgitterzyklus (V-,F- oder W-cycle) und das gröbste Gitter, auf dem ein direkter Löser, z. B. ein Gauss-Verfahren, einsetzt. Für diese Gleichung reicht meistens ein V- oder F-cycle. Der W-cycle wird dann nicht benötigt. Der direkte Löser kommt zum Einsatz, wenn nicht weiter vergröbert werden kann. Die Anzahl der Glättungsschritte liegt typischerweise bei zwei Vorglättungsschritten und einem Nachglättungsschritt. Diese Parameter können ganz einfach durch numerische Experimente bestimmt und als Standardparameter verwendet werden.

Für das regularisierte Newton-artige Verfahren, das heißt für Randwertproblem 2, müssen andere Komponenten gewählt werden. Dies liegt darin begründet, dass der Ausdruck $J^t_d J_d$ zu starken Sprüngen in den Koeffizienten des Gleichungssystems führt. Dies wiederum verschlechtert die Konvergenz des Mehrgitterlösers erheblich. Im Wesentlichen betreffen die Veränderungen das Relaxationsverfahren, das ein besonders bevorzugter Teil des Mehrgitterverfahrens ist. Anstatt punktweiser Relaxation, wie im Standardmehrgitter, werden ganze Linien relaxiert. Hierdurch werden starke lokale Unterschiede besser erfasst. Die in der Linienrelaxation auftretenden bandbegrenzten linearen Gleichungssysteme werden mit einem entsprechenden direkten Löser, der die asymptotische Komplexität des Mehrgitterverfahrens erhält, gelöst. Zusätzlich wird eine operatorabhängige Grobgitterkorrektur verwendet, die zu einer weiter verbesserten Konvergenz und Robustheit gegenüber Rauschen in den Bilddaten führt.

Um auch große Verschiebungen berechnen zu können und die Geschwindigkeit zu erhöhen, wird das Verfahren in einen Multiresolutions-Ansatz eingebettet. Die Bilder werden in einer Pyramide bis zu einer definierten Auflösung vergröbert. Auf der niedrigsten Auflösung der Pyramide wird eine Verschiebung berechnet, die als Startnäherung für die nächste Auflösungsstufe dient. Auf diese Weise werden zuerst grobe Strukturen angepasst und in jedem weiteren Schritt immer feinere Strukturen. Zusätzlich zu der verbesserten Ausführungsgeschwindigkeit wird das Verfahren auch robuster gegenüber lokalen Minima, da große Verschiebungen auf groben Auflösungen berechnet werden.

Die durch das Verfahren berechneten Verschiebungen u werden auch als Transformationsfelder bezeichnet. Mit Hilfe dieser Transformationsfelder können beliebige Informationen aus dem Templateraum in den Referenzraum transformiert werden. Hierzu wird für jeden Punkt im Referenzraum der dazugehörige Punkt im Templateraum bestimmt. Im Falle von Bilddaten wird der Wert für diesen Punkt durch Interpolation bestimmt. Daten aus unterschiedlichen Templaträumen können in einem einheitlichen Referenzraum verglichen werden. Transformationsfelder charakterisieren die Form des Gehirns in Bezug auf ein Referenzgehirn. Sie können damit ihrerseits statistisch weiter verarbeitet und ausgewertet werden, um individuelle oder Gruppenunterschiede zu erfassen, so z. B. zwischen Patienten und gesunden Kontrollen oder Veränderungen in der Himform im zeitlichen Verlauf.

Das Verfahren wird sowohl für die Rekonstruktion der dreidimensionalen Repräsentation der histologischen Schnittserie (zwei-dimensionaler Fall), als auch für die Registrierung der Volumendatensätze (drei-dimensionaler Fall) eingesetzt.

**Patentansprüche**

**1.** Verfahren zur topographischen Darstellung von Veränderungen in einem untersuchten Gehirn unter Einsatz von Volumendatensätzen, bei dem eine Kartierung von Arealen durch eine Extraktion von Profilen erfolgt, wobei die Profile Grenzen zweier Areale des untersuchten Gehirns erfassen, und die Erfassung der Grenze der beiden Areale über die Berechnung eines multivariaten Abstandsmaßes erfolgt und eine Änderung einer Mikrostruktur im Bereich der Grenze der beiden Areale erfasst und mit mindestens einer Mikrostruktur eines Grenzbereiches eines Referenzgehirns verglichen wird, wobei die Volumendatensätze des untersuchten Gehirns und des Referenzgehirns mit einem numerisch zu lösenden elastischen Anpassungsverfahren auf einen Zielvolumendatensatz transformiert werden, wobei um die Regularität einer Lösung $u$ zu gewährleisten, zusätzlich zu einem Abstandsmaß $D$ ein Regularisierungsterm $R$ betrachtet wird, der bestimmte Klassen von Transformationen bevorzugt, wobei mit Hilfe eines Mehrgitterverfahrens ein grauwertbasiertes Energiefunktional minimiert wird,
**dadurch gekennzeichnet dass** das Mehrgitterverfahren ein Relaxationsverfahren umfasst, bei dem ganze linien relaxiert werden.

**2.** Verfahren nach Anspruch 1,
**dadurch gekennzeichnet,**
**dass** die in der Relaxation der Linien auftretenden bandbegrenzten Gleichungssysteme mit einem direkten Löser, der die asymptotische Komplexität des Mehrgitterverfahrens enthält, gelöst werden.

**3.** Verfahren nach Anspruch 2,

**dadurch gekennzeichnet,**
**dass** zusätzlich eine operatorabhängige Grobgitterkorrektur verwendet wird.

4. Verfahren nach einem der Ansprüche 1 bis 3,
**dadurch gekennzeichnet,**
**dass** das Energiefunktional aus einem elastischen Anteil und einer Grauwertdistanz der Volumendatensätze besteht.

5. Verfahren nach einem oder mehreren der vorangegangenen Ansprüche,
**dadurch gekennzeichnet,**
**dass** die Grenze zwischen den beiden Arealen durch eine Änderung wenigstens eines architektonischen Parameters ermittelt wird und dass zugrunde liegende resultierende Volumenelemente des Ausgangsdatensatzes erfasst und durch ein Transformationsverfahren so transformiert werden, dass sie Volumenelementen in wenigstens einem anderen Referenzgehirn entsprechen.

6. Verfahren nach Anspruch 5,
**dadurch gekennzeichnet,**
**dass** das Transformationsverfahren beinhaltet, dass für Volumenelemente des Referenzgehirns jeweils ein Vektor ermittelt wird, der eine Transformation in die jeweils entsprechende räumliche Koordinate des untersuchten Gehirns ermöglicht, wobei mehrere Vektoren abgespeichert werden und für weitere Untersuchungen beliebig oft zur Verfügung stehen.

7. Verfahren nach einem oder mehreren der vorangegangenen Ansprüche,
**dadurch gekennzeichnet,**
**dass** die Daten untersuchter Gehirne in einem Zieldatensatz zu einer Überlagerung gebracht werden, wobei Wahrscheinlichkeitskarten berechnet werden, die für mehrere Volumenelemente des Zieldatensatzes eine relative Häufigkeit angeben, mit der das ermittelte funktionale Areal in einer entsprechenden Region eines Referenzgehirns vorhanden ist.

8. Verfahren nach einem oder mehreren der vorangegangenen Ansprüche,
**dadurch gekennzeichnet,**
**dass** die Daten mindestens eines untersuchten Gehirns in einem Zieldatensatz zu einer Überlagerung gebracht werden, wobei sie untereinander oder mit Daten des Zieldatensatzes, insbesondere Wahrscheinlichkeitskarten, verglichen werden.

9. Verfahren nach einem oder mehreren der vorangegangenen Ansprüche,
**dadurch gekennzeichnet,**
**dass** das Verfahren in einen Multiresolutions-Ansatz eingebettet wird, wobei Bilddaten in einer Pyramide bis zu einer definierten Auflösung vergröbert werden, und auf der niedrigsten Auflösung der Pyramide eine Verschiebung berechnet wird, die als Startnäherung für die nächste Auflösungsstufe dient.

**Claims**

1. A method for the topographical depiction of changes in an examined brain, making use of volume data records, in which regions are mapped through an extraction of profiles, wherein the profiles detect boundaries of two regions of the examined brain, and the boundary of the two regions is detected by calculating a multivariate distance dimension, and a change in a microstructure in the area of the boundary of the two regions is detected and compared to at least one microstructure of a boundary area of a reference brain, wherein, by means of an elastic adaptation method that is to be numerically solved, the volume data records of the examined brain and of the reference brain are transformed into a target volume data record, wherein in order to ensure the regularity of a solution u, in addition to a distance dimension $D$, a regularization term $R$ is considered that gives preference to certain classes of transformations, wherein, using a multigrid method, a gray-scale-based energy functional is minimized,
**characterized in that**
the multigrid method comprises a relaxation method in which entire lines are relaxed.

2. The method according to claim 1,
**characterized in that,**

the band-limited equation systems that occur in the relaxation of the lines are solved with a direct equation solver that comprises the asymptotic complexity of the multigrid method.

3. The method according to claim 2,
   **characterized in that**
   additionally, an operator-dependent coarse grid correction is used.

4. The method according to one of claims 1 to 3,
   **characterized in that**
   the energy functional consists of an elastic fraction and a gray-scale distance of the volume data records.

5. The method according to one or more of the preceding claims,
   **characterized in that**
   the boundary between the two regions is determined by a change in at least one architectonic parameter, and **in that** underlying resultant volume elements of the initial data record are acquired and transformed by a transformation method in such a way that they correspond to volume elements in at least one other reference brain.

6. The method according to claim 5,
   **characterized in that**
   the transformation method comprises that, for volume elements of the reference brain, a vector is determined that allows a transformation into each of the corresponding spatial coordinates of the examined brain, wherein several vectors are stored and are available for further examinations as often as desired.

7. The method according to one or more of the preceding claims,
   **characterized in that**
   the data items of examined brains in a target data record are superimposed, wherein probability maps are calculated that, for several volume elements of the target data record, indicate the relative frequency with which the determined functional region is present in a corresponding region of a reference brain.

8. The method according to one or more of the preceding claims,
   **characterized in that**
   the data items of at least one examined brain in a target data record are superimposed, wherein they are compared among each other or else to data of the target data record, especially to probability maps.

9. The method according to one or more of the preceding claims,
   **characterized in that**
   the method is incorporated into a multi-resolution approach, wherein image data in a pyramid is made coarser until a defined resolution is achieved, and a shift is calculated at the lowest resolution of the pyramid and this shift serves as a starting approximation for the next resolution stage.

**Revendications**

1. Procédé pour la représentation topographique de modifications dans un cerveau examiné utilisant des jeux de données de volume, dans lequel une cartographie de zones est effectuée par l'extraction de profils, les profils relevant des limites de deux zones du cerveau examiné et le relevé de la limite des deux zones s'effectuant par l'intermédiaire du calcul d'une mesure de distance multivariée et une modification d'une microstructure dans la région de la limite des deux zones étant relevée et étant comparée avec au moins une microstructure d'une région limite d'un cerveau de référence, les jeux de données de volume du cerveau examiné et du cerveau de référence étant transformés en un jeu de données de volume cible avec un procédé d'adaptation élastique à résoudre numériquement, un terme de régularisation R qui préfère certaines classes de transformation étant envisagé en plus d'une mesure de distance D pour assurer la régularité d'une solution u, une fonctionnelle d'énergie basée sur des valeurs de gris étant minimisée à l'aide d'un procédé multigrille, **caractérisé en ce que** le procédé multigrille comprend un procédé de relaxation dans lequel des lignes entières sont relaxées.

2. Procédé selon la revendication 1, **caractérisé en ce que** les systèmes d'équation limités en bande qui surviennent dans la relaxation des lignes sont résolus par un solutionneur direct qui contient la complexité asymptotique du procédé multigrille.

**3.** Procédé selon la revendication 2, **caractérisé en ce qu'**une correction de grille grossière dépendant de l'opérateur est utilisée additionnellement.

**4.** Procédé selon l'une des revendications 1 à 3, **caractérisé en ce que** la fonctionnelle d'énergie se compose d'une partie élastique et d'un écart de valeurs de gris des jeux de données de volume.

**5.** Procédé selon l'une ou plusieurs des revendications précédentes, **caractérisé en ce que** la limite entre les deux zones est déterminée par une modification d'au moins un paramètre architectonique et **en ce que** des éléments de volume résultants sous-jacents du jeu de données de départ sont relevés et sont transformés par un procédé de transformation de manière telle qu'ils correspondent à des éléments de volume dans au moins un autre cerveau de référence.

**6.** Procédé selon la revendications 5, **caractérisé en ce que** le procédé de transformation implique que, pour des éléments de volume du cerveau de référence, respectivement un vecteur est déterminé, lequel permet une transformation vers les coordonnées spatiales respectives correspondantes du cerveau examiné, plusieurs vecteurs étant mis en mémoire et mis à disposition à volonté pour d'autres examens.

**7.** Procédé selon l'une ou plusieurs des revendications précédentes, **caractérisé en ce que** les données de cerveaux examinés sont mises en superposition dans un jeu de données cibles, des cartes de probabilité étant calculées, lesquelles indiquent, pour plusieurs éléments de volume du jeu de données cibles, une fréquence relative avec laquelle la zone fonctionnelle déterminée est présente dans une région correspondante d'un cerveau de référence.

**8.** Procédé selon l'une ou plusieurs des revendications précédentes, **caractérisé en ce que** les données d'au moins un cerveau examiné sont mises en superposition dans un jeu de données cibles, lesdites données étant comparées entre elles ou avec des données du jeu de données cibles, en particulier des cartes de probabilité.

**9.** Procédé selon l'une ou plusieurs des revendications précédentes, **caractérisé en ce que** le procédé est intégré à une approche multirésolution, des données de type image étant, dans une pyramide, rendues grossières jusqu'à une résolution définie et un décalage qui sert d'approximation de départ pour le niveau de résolution suivant étant calculé pour la résolution la plus basse de la pyramide.

Fig. 1

Fig. 2

Fig.3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **G. E. CHRISTENSEN et al.** Volumetric Transformation of Brain Anatomy. *IEEE Trans. on Medical Imaging,* Dezember 1997, vol. 16 (6), 864-877
- **A. SCHLEICHER et al.** Observer-Independent Method for Microstructural Parcellation of Cerebral Cortex: A Quantitative Approach to Cytoarchitectonics. *NeuroImage,* 1999, vol. 9, 165-177
- **S.B. EICKHOFF et al.** A new SPM toolbox for combining probabilistic cytoarchitectonic maps and functional imaging data. *NeuroImage,* 2005, vol. 25, 1325-1335
- **S. HENN et al.** Elastische Anpassung in der digitalen Bildverarbeitung auf mehreren Auflösungsstufen mit Hilfe von Mehrgitterverfahren. *19.DAGM-Symposium Braunschweig,* 15. September 1997, 392-399
- **S. HENN et al.** Lesion Preserving Image Registration with Applications to Human Brains. *DAGM 2004,* 2004, 496-503
- **L. HÖMKE et al.** Lesion mapping in MRI data: an application of cytoarchitectonic probabilistic maps. *2.Vogt-Brodmann Symposium,* 2004

- **K. AMUNTS et al.** Analysis of neural mechanisms underlying verbal fluency in cytoarchitectonically defined stereotaxic space - The roles of Brodmann areas 44 and 45. *NeuroImage,* 2004, vol. 22, 42-56
- A Multigrid Approach for Minimizing a Nonlinear Functional for Digital Image Matching. **S. HENN.** Computing. Springer Verlag, 2000, vol. 64, 339-348
- **S. HENN et al.** Multimodal image registration using a variational approach. *SIAM J.Sci.Comput,* 2003, 1429-1447
- **SCHLEICHER ; ZILLES.** A quantitative approach to cytoarchitectonics: analysis of structural inhomogeneities in nervous tissue using an image analyser. *J.Microsc.,* 1990, vol. 157, 367-381
- **MAHALANOBIS, P.C. ; MAJUMDA, D.N. ; RAO, C.R.** Anthropometric survey of the united provinces. *A statistical study. Sankhya,* 1949, vol. 9, 89-324
- **U. TROTTENBERG ; C.W. OOSTERLEE ; A. SCHÜLLER.** Multigrid. Academic Press, 2001